(19) Europäisches Patentamt
European Patent Office
Office européen des brevets

(11) **EP 2 702 436 B1**

(12) **EUROPÄISCHE PATENTSCHRIFT**

(45) Veröffentlichungstag und Bekanntmachung des Hinweises auf die Patenterteilung:
**11.10.2017  Patentblatt 2017/41**

(21) Anmeldenummer: **12719631.9**

(22) Anmeldetag: **26.04.2012**

(51) Int Cl.:
***G02B 6/00*** *(2006.01)*

(86) Internationale Anmeldenummer:
**PCT/EP2012/057609**

(87) Internationale Veröffentlichungsnummer:
**WO 2012/146639 (01.11.2012 Gazette 2012/44)**

(54) **LEUCHTVORRICHTUNG MIT OLEDS ODER QLEDS**

LIGHT DEVICE COMPRISING OLEDS OR QLEDS

DISPOSITIF D'ÉCLAIRAGE COMPRENANT DES OLED OU DES QLED

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2011  DE 102011017720**

(43) Veröffentlichungstag der Anmeldung:
**05.03.2014  Patentblatt 2014/10**

(73) Patentinhaber: **Tridonic GmbH & Co. KG**
**6851 Dornbirn (AT)**

(72) Erfinder:
- **KIRCHHOF, Christian**
  **01099 Dresden (DE)**
- **AMELUNG, Jörg**
  **01099 Dresden (DE)**
- **DWORZAK, Mathias**
  **63069 Offenbach (DE)**
- **ERITT, Michael**
  **01129 Dresden (DE)**

(74) Vertreter: **Thun, Clemens**
**Mitscherlich PartmbB**
**Patent- und Rechtsanwälte**
**Sonnenstraße 33**
**80331 München (DE)**

(56) Entgegenhaltungen:
**DE-A1- 10 333 040    JP-A- 2004 178 850**
**US-A1- 2007 188 677    US-A1- 2010 026 931**
**US-A1- 2011 026 273    US-A1- 2011 242 845**
**US-B1- 7 632 002**

**Beschreibung**

Die Erfindung betrifft eine Leuchtvorrichtung mit einem ersten Leuchtmittel in Form wenigstens einer OLED (organische Leuchtdiode) oder wenigstens einer QLED (Quantendotleuchtdiode; quantum dot light emitting diode) zur Erzeugung eines Lichts und mit einem zweiten Leuchtmittel, ebenfalls in Form wenigstens einer OLED oder wenigstens einer QLED zur Erzeugung eines zweiten Lichts.

Auf der Basis von OLEDs oder QLEDs können neuartige, dünne Flächenlichtelemente bzw. Leuchtvorrichtungen mit flächigen Lichtabgabebereichen verwirklicht werden. Als flächiger Leuchtkörper mit einer - im Vergleich zu einer LED (Leuchtdiode) - moderateren Leuchtdichte ist eine OLED bzw. QLED sehr gut geeignet zur Herstellung einer Lichtquelle, die flächig diffuses Licht abgibt. Insbesondere im professionellen Beleuchtungsbereich ist eine diffuse Beleuchtung eine neue Möglichkeit der Realisierung von großflächigen hochqualitativen Leuchten. Hierbei kann eine OLED bzw. QLED aufgrund ihrer Dünnschichttechnologie grundsätzlich auch zur Realisierung von flexiblen bzw. biegsamen Leuchtkörpern dienen, die ganz neue Anwendungen in der Beleuchtung von Räumen gestatten.

Eine entsprechende Leuchtvorrichtung weist eine Lichtabgabefläche auf, über die sie Licht nach außen abgibt. Um eine möglichst homogene Lichterscheinung auf der Lichtabgabefläche zu bewirken, ist es erforderlich, eine möglichst homogene Stromdichteverteilung über den Bereich der Lichtabgabefläche hinweg zu realisieren. Dem sind jedoch aufgrund des Flächenwiderstands der Anode der OLED bzw. QLED grundsätzlich Grenzen gesetzt. Ein bestimmtes Maß an Homogenität vorausgesetzt, ist es hierdurch bedingt lediglich möglich, Lichtabgabeflächen bis zu einer bestimmten maximalen Größe zu verwirklichen.

Ist ein Leuchte mit einer entsprechend größeren Lichtabgabefläche gewünscht, lässt sich eine solche durch ein Nebeneinanderanordnen mehrerer entsprechender Leuchtvorrichtungen mit kleineren Lichtabgabeflächen bilden. Allerdings sind hierbei an den Grenzbereichen aufgrund der Kontaktierungsbereiche der OLEDs bzw. QLEDs vergleichsweise große Unterbrechungen der Lichtabgabefläche gegeben, die in der Regel nicht erwünscht sind bzw. einer entsprechenden homogenen Lichtabgabe insgesamt entgegenstehen.

Eine weitere Möglichkeit zur Erzeugung homogener dünner Lichtflächen liegt in der Nutzung einer seitlichen Lichteinspeisung in eine Kunststoff- oder Glasplatte mit Auskoppelelementen an der Oberfläche der Platte. Nachteilig hierbei ist jedoch die begrenzte Effizienz aufgrund der Lichtabsorption innerhalb der Platte. Dementsprechend lassen sich auch auf diese Weise bei bestimmter Homogenität nur begrenzt große Lichtabgabeflächen erzielen und ab bestimmten Leuchtdichten sind Kühlkörper zur Kühlung der OLEDs bzw. QLEDs erforderlich, wodurch der Raumbedarf der Leuchtvorrichtung erheblich zunimmt.

Aus dem gattungsgemäßen Dokument
US 2010/0026931 A1 ist eine Leuchtvorrichtung mit mehreren, parallel zueinander angeordneten Lichtleiterplatten, sowie mit organischen Elektrolumineszenz-Lichtquellen bekannt. Das Licht dieser Lichtquellen wird jeweils umgelenkt und dann seitlich in jeweils eine der Lichtleiterplatten eingestrahlt. Im Weiteren wird das Licht über große Flächen der Lichtleiterplatten nach außen abgegeben.
Aus der US 2011/0026273 A1 ist eine Vorrichtung für eine LCD-Hintergrundbeleuchtung (LCD: Liquid Crystal Display) bekannt. Die Vorrichtung umfasst mehrere Leuchtmittel in Form von OLEDs, die ihr Licht jeweils über eine schmale Kante in einen flächigen Lichtlenkfilm einstrahlen. Im Weiteren wird das Licht von den Lichtlenkfilmen jeweils über eine der beiden großen Oberflächen abgestrahlt.
Der Erfindung liegt die Aufgabe zugrunde, eine entsprechende verbesserte Leuchtvorrichtung anzugeben; insbesondere soll die Leuchtvorrichtung bei guter Effizienz eine besonders große, besonders homogen erscheinende Lichtabgabefläche aufweisen können.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist eine Leuchtvorrichtung vorgesehen, die ein erstes Leuchtmittel in Form wenigstens einer OLED oder wenigstens einer QLED zur Erzeugung eines ersten Lichts aufweist, sowie ein zweites Leuchtmittel in Form wenigstens einer OLED oder wenigstens einer QLED zur Erzeugung eines zweiten Lichts. Weiterhin weist die Leuchtvorrichtung ein erstes Lichtumlenkelement mit einer Einkoppelfläche zur Einkopplung des ersten Lichts und einer Auskoppelfläche zur Auskopplung des ersten Lichts auf, sowie ein zweites Lichtumlenkelement mit einer Einkoppelfläche zur Einkopplung des zweiten Lichts und einer Auskoppelfläche zur Auskopplung des zweiten Lichts. Dabei sind die Auskoppelfläche des ersten Lichtumlenkelements und die Auskoppelfläche des zweiten Lichtumlenkelements lediglich durch einen Spalt getrennt, der maximal so breit ist wie ein Zehntel, vorzugsweise ein Hundertstel, insbesondere ein Fünfhundertstel seiner Länge. Das Lichtumlenkelement ist quaderförmig.

Durch die Verwendung der Lichtumlenkelemente lassen sich die beiden Auskoppelflächen besonders nahe aneinander anordnen, so dass durch diese Auskoppelflächen zusammen eine Lichtabgabefläche der Leuchtvorrichtung gebildet ist, die vergleichsweise besonders groß ist. Dabei ist die Lichtabgabefläche lediglich durch den Spalt strukturiert, so dass eine vergleichsweise homogen erscheinende Lichtabgabe über diese Lichtabgabefläche hinweg ermöglicht ist. Aufgrund der geringen Flächenabwärmedichte einer OLED bzw. QLED ist, bei bestimmter Größe der Lichtabgabefläche, eine Integration von Kühlkörpern dabei nicht erforderlich, wodurch die Breite des Spaltes besonders klein gehalten werden kann und damit eine besonders gute Homogenität der Lichtabgabe ermöglicht ist. Außerdem lassen sich auf diese Weise die zur Erzielung einer bestimmten Helligkeit des abgegebenen Lichts notwendigen Lichtstromhöhen und auch die Lichtverluste innerhalb der Lichtumlenkelemente besonders klein bzw. gering halten.

Aufgrund der geringen Dicke einer OLED bzw. QLED, die weniger als 2 mm betragen kann, lässt sich der Spalt besonders klein gestalten. Der Spalt kann dementsprechend beispielsweise schmaler als 5 mm oder sogar schmaler als 2 mm sein.

Vorzugsweise ist die Auskoppelfläche des ersten Lichtumlenkelements streifenförmig und die Auskoppelfläche des zweiten Lichtumlenkelements ebenfalls streifenförmig, wobei vorzugsweise die beiden genannten Auskoppelflächen parallel zueinander angeordnet sind. Durch die streifenförmige Ausgestaltung lassen sich die zur Erzielung einer bestimmten Helligkeit erforderlichen Ströme zum Betreiben der beiden Leuchtmittel vergleichsweise klein halten und ebenso die Lichtverluste innerhalb der beiden Lichtumlenkelemente.

Vorteilhaft ist daher vorgesehen, dass die Auskoppelfläche des ersten Lichtumlenkelements eine Länge aufweist, die gleich der Länge des Spalts ist und eine Breite, die maximal ein Drittel, vorzugsweise maximal ein Fünftel der Länge der Auskoppelfläche des ersten Lichtumlenkelements beträgt. Analoges ist vorzugsweise auch für die Auskoppelfläche des zweiten Lichtumlenkelements vorgesehen.

Vorteilhaft weist die Leuchtvorrichtung weiterhin ein optisches Zerstreuungselement auf, das mit Bezug auf die Auskoppelfläche des ersten Lichtumlenkelements den Spalt zumindest teilweise, vorzugsweise gänzlich abdeckend angeordnet ist. Durch das Zerstreuungselement lässt sich erzielen, dass bei Blick auf die beiden Auskoppelflächen bzw. auf die Lichtabgabefläche der Leuchtvorrichtung der Spalt weniger oder gar nicht mehr als solcher wahrnehmbar ist, so dass die Homogenität der Lichtabgabe weiterhin gesteigert ist.

Vorzugsweise ist das erste Leuchtmittel mittels eines optisch transparenten Klebstoffs an die Einkoppelfläche des ersten Lichtumlenkelements geklebt. Analoges ist vorteilhaft auch mit Bezug auf das zweite Leuchtmittel und die Einkoppelfläche des zweiten Lichtumlenkelements vorgesehen.

Vorteilhaft sind an der Auskoppelfläche des ersten Lichtumlenkelements Auskoppelelemente angeordnet, beispielsweise in Form von Streuzentren, Mikrolinsen, Pyramidenelementen oder Trapezelementen. Hierdurch ist eine besonders effektive Auskopplung des ersten Lichts ermöglicht. Durch geeignete Wahl der Dichte und Form der Auskoppelelemente lässt sich eine besonders große Homogenität des über die Auskoppelfläche des ersten Lichtumlenkelements austretenden Lichts bewirken. Analoges gilt vorzugsweise auch mit Bezug auf die Auskoppelfläche des zweiten Lichtumlenkelements.

Vorzugsweise ist zwischen dem ersten Leuchtmittel und der Einkoppelfläche des ersten Lichtumlenkelements ein Lichteinkoppelelement angeordnet. Hierdurch lässt sich eine besonders effiziente Einkopplung bewirken. Vorzugsweise ist das Lichteinkoppelelement hierfür dazu ausgelegt, die Richtungsverteilung des ersten Lichts vor dessen Einkopplung in das erste Lichtumlenkelement zu verringern. Analoges gilt vorzugsweise auch mit Bezug auf das zweite Leuchtmittel und das zweite Lichtumlenkelement.

Erfindungsgemäß weist das erste Leuchtmittel auf einer Seite, die dem zweiten Lichtumlenkelement zugewandt ist, eine nach außen reflektierende Schicht auf. Hierdurch ist ermöglicht, dass das zweite Licht an dieser reflektierenden Schicht reflektiert wird und so die Effizienz der Auskopplung des zweiten Lichts über die Auskoppelfläche des zweiten Lichtumlenkelements verbessert ist.

Vorteilhaft ist die Leuchtvorrichtung derart gestaltet, dass das erste Leuchtmittel ein weiteres Licht in Richtung auf das zweite Lichtumlenkelement abgibt, wobei das weitere Licht in das zweite Lichtumlenkelement eingekoppelt wird. Durch diese Ausgestaltung kann die Homogenität und Effizienz der Lichtauskopplung weitergehend verbessert werden. Insbesondere lässt sich hierdurch erzielen, dass die Mindestbreite der streifenförmigen Auskoppelflächen zur Erzielung einer bestimmten Helligkeit des von der Leuchtvorrichtung insgesamt abgegebenen Lichts größer gewählt werden kann, so dass insbesondere der Aufwand beim Zusammenbau der Leuchtvorrichtung verringert ist.

Gemäß einer bevorzugten Ausführung weisen die Einkoppelfläche des ersten Lichtumlenkelements und die Einkoppelfläche des zweiten Lichtumlenkelements zueinander. Alternativ können die Einkoppelfläche des ersten Lichtumlenkelements und die Einkoppelfläche des zweiten Lichtumlenkelements mit Bezug auf das zweite Lichtumlenkelement an gegenüberliegenden Seiten angeordnet sein.

Vorteilhaft weist die Leuchtvorrichtung außerdem ein drittes Leuchtmittel zur Erzeugung eines dritten Lichts auf, wobei das dritte Leuchtmittel analog zu dem ersten Leuchtmittel ausgestaltet ist, sowie ein drittes Lichtumlenkelement mit einer Einlcoppelfläche zur Einkopplung des dritten Lichts und einer Auskoppelfläche zur Auskopplung des dritten Lichts, wobei das dritte Lichtumlenkelement analog zum ersten Lichtumlenkelement ausgestaltet ist und die Auskoppelfläche des zweiten Lichtumlenkelements und die Auskoppelfläche des dritten Lichtumlenkelements lediglich durch einen weiteren Spalt getrennt sind, der analog zu dem zuerst genannten Spalt ausgebildet ist. Auf diese Weise lässt sich durch die Gesamtheit der drei Auskoppelflächen eine besonders große Lichtabgabefläche der Leuchtvorrichtung erzielen.

Vorzugsweise weist das erste Lichtumlenkelement auf einer der Auskoppelfläche des ersten Lichtumlenkelements gegenüber liegenden Seite eine nach innen reflektierende Schicht auf. Hierdurch lässt sich die Effizienz der Lichtabgabe weiterhin steigern. Analoges gilt wiederum bevorzugt für das zweite Lichtumlenkelement.

Vorteilhaft weist die Auskoppelfläche des ersten Lichtumlenkelements eine Wölbung auf. Analoges gilt auch für die Auskoppelfläche des zweiten Lichtumlenkelements. Auf diese Weise lässt sich eine gewölbte Lichtabgabefläche der Leuchtvorrichtung realisieren.

Vorzugsweise weist das erste Lichtumlenkelement außerdem eine weitere Auskoppelfläche auf, die der zuerst genannten Auskoppelfläche des ersten Lichtumlenkelements gegenüberliegt, wobei die Leuchtvorrichtung derart gestaltet ist, dass ein von dem ersten Leuchtmittel abgegebenes Licht über die Einkoppelfläche des ersten Lichtumlenkelements in das erste Lichtumlenkelement eingekoppelt wird und über die weitere Auskoppelfläche ausgekoppelt wird. Hierdurch lässt sich erzielen, dass die Leuchtvorrichtung in zwei entgegengesetzte Richtungen Licht abgibt. Analoges gilt auch mit Bezug auf das zweite Lichtumlenkelement und das zweite Leuchtmittel.

Die Erfindung wird im Folgenden anhand von Ausführungsbeispielen und mit Bezug auf die Zeichnungen näher erläutert. Es zeigen:

Fig. 1a          eine Skizze zum prinzipiellen Aufbau einer erfindungsgemäßen Leuchtvorrichtung,

Fig. 1b          zwei Lichtumlenkelemente der Leuchtvorrichtung in separierter Form,

Fig. 2           eine Skizze zu einem ersten Ausführungsbeispiel,

Fig. 3           eine Skizze zu einem zweiten Ausführungsbeispiel,

Fig. 4           eine Skizze zu einem dritten Ausführungsbeispiel,

Fig. 5           eine Skizze zu einem vierten Ausführungsbeispiel,

Figuren 6a und 6b    Skizzen zu Varianten und

Figuren 7a und 7b    Skizzen zu weiteren Varianten mit Bezug auf die Formen der Auskoppelflächen.

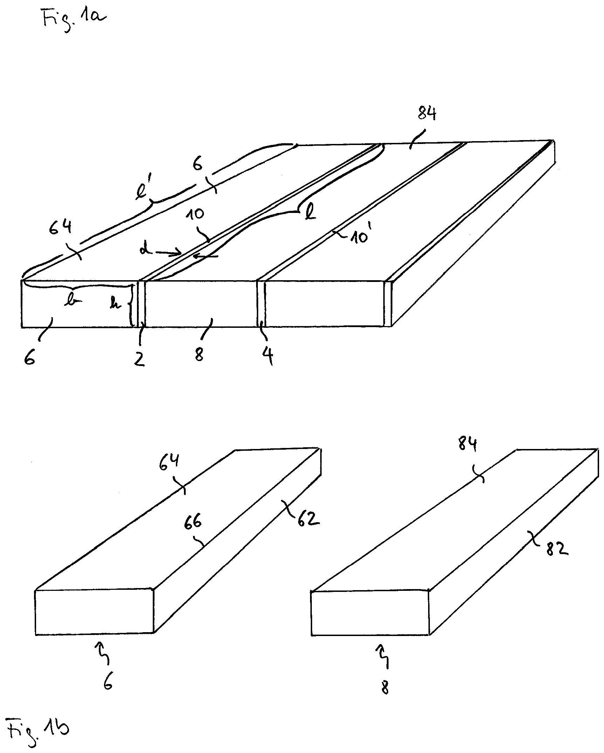

In Fig. 1a ist eine Skizze zum prinzipiellen Aufbau einer erfindungsgemäßen Leuchtvorrichtung gezeigt. Die Leuchtvorrichtung weist ein erstes Leuchtmittel 2 in Form wenigstens einer OLED oder wenigstens einer QLED zur Erzeugung eines ersten Lichts auf, sowie ein zweites Leuchtmittel 4, ebenfalls in Form wenigstens einer OLED oder wenigstens einer QLED, zur Erzeugung eines zweiten Lichts. Weiterhin weist die Leuchtvorrichtung ein erstes Lichtumlenkelement 6 und ein zweites Lichtumlenkelement 8 auf. Bei den Lichtumlenkelementen 6, 8 kann es sich um Lichtleiterplatten handeln.

In Fig. 1b sind die beiden Lichtumlenkelemente 6, 8 in separierter Form skizziert. Das erste Lichtumlenkelement 6 umfasst eine Einkoppelfläche 62 zur Einkopplung des ersten Lichts und eine Auskoppelfläche 64 zur Auskopplung des ersten Lichts. Analog umfasst das zweite Lichtumlenkelement 8 eine Einkoppelfläche 82 zur Einkopplung des zweiten Lichts und eine Auskoppelfläche 84 zur Auskopplung des zweiten Lichts.

Die wenigstens eine OLED bzw. QLED des ersten Leuchtmittels 2 kann eine erste flächige Elektrode und eine zweite flächige Elektrode aufweisen, wobei diese beiden Elektroden zumindest in erster Näherung parallel zu der Einkoppelfläche 62 des ersten Lichtumlenkelements 6 angeordnet sind. Analoges gilt mit Bezug auf das zweite Leuchtmittel 4 und das zweite Lichtumlenkelement 8.

Vorzugsweise grenzt die Auskoppelfläche 64 des ersten Lichtumlenkelements 6 unter Bildung einer Kante 66 unmittelbar an die Einkoppelfläche 62 des ersten Lichtumlenkelements 6, wobei die Kante 66 insbesondere eine 90°-Kante sein kann. Analoges gilt für das zweite Lichtumlenkelement 8.

Das erste Lichtumlenkelement 6 kann - wie in Fig. 1 exemplarisch skizziert - eine Quaderform aufweisen, bei der zwei große Hauptflächen über vier jeweils kleinere Seitenflächen verbunden sind, wobei die Auskoppelfläche 64 durch eine der beiden großen Hauptflächen gebildet ist und die Einkoppelfläche 62 durch eine der vier Seitenflächen. Bei den vier Seitenflächen kann es sich insbesondere um zwei längere Seitenflächen und zwei kürzere Seitenflächen handeln, wobei - wie in Fig. 1 exemplarisch skizziert - die Einkoppelfläche 62 vorzugsweise durch eine der beiden längeren Seitenflächen gebildet ist. Für das zweite Lichtumlenkelement 8 gilt wiederum Analoges.

Die Auskoppelfläche 64 des ersten Lichtumlenkelements 6 und die Auskoppelfläche 84 des zweiten Lichtumlenkelements 8 sind dabei lediglich durch einen Spalt 10 getrennt. Der Spalt 10 ist dabei maximal so breit wie ein Zehntel, vorzugsweise ein Hundertstel, insbesondere ein Fünfhundertstel seiner Länge $l$. Für das Verhältnis der maximalen Breite $d$ des Spalts 10 zu seiner Länge $l$ kann also gelten $l/d \geq 10$, bzw. $l/d \geq 100$, besonders bevorzugt $l/d \geq 500$.

Die Auskoppelfläche 64 des ersten Lichtumlenkelements 6 und die Auskoppelfläche 84 des zweiten Lichtumlenkelements 8 können derart angeordnet sein, dass sie in einer Ebene liegen. Alternativ kann vorgesehen sein, dass die Anordnung derart ist, dass die beiden genannten Auskoppelflächen 64, 84 zwar nicht in einer Ebene liegen, aber im Bereich des Spaltes 10 im Sinn eines stetigen Übergangs relativ zueinander gestaltet sind. In jedem Fall kann auf diese Weise durch die beiden Auskoppelflächen 64, 84 quasi "eine" Lichtabgabefläche der Leuchtvorrichtung gebildet sein, die lediglich eine geringfügige strukturelle Unterbrechung in Form des schmalen Spalts 10 aufweist. Die Anordnung kann derart sein, dass der Spalt 10 lediglich einen Flächenbereich einnimmt, der kleiner ist als ein Zehntel, vorzugsweise kleiner als ein Fünzigstel der Auskoppelfläche 64 des ersten Lichtumlenkelements 6. Durch die genannten Ausbildungsformen lässt sich eine besonders große Lichtabgabefläche der Leuchtvorrichtung erzielen, deren Lichtabgabe "fast" ganz homogen erscheint.

Vorzugsweise ist die Auskoppelfläche 64 des ersten Lichtumlenkelements 6 streifenförmig und die Auskoppelfläche 84 des zweiten Lichtumlenkelements 8 ebenfalls streifenförmig, wobei vorteilhaft die beiden genannten Auskoppelflächen 64, 84 parallel zueinander angeordnet sind. Durch die streifenförmige Ausgestaltung lässt sich insgesamt eine besonders große Lichtabgabefläche erzielen.

Wie erwähnt umfasst das erste Leuchtmittel 2 wenigstens eine OLED oder wenigstens eine QLED. Es kann vorgesehen sein, dass das erste Leuchtmittel 2 zwei oder mehr OLEDs bzw. QLEDs aufweist, die längs des Spalts 10 bzw. längs der Einkoppelfläche 62 des ersten Lichtumlenkelements 6 betrachtet in einer Reihe hintereinander angeordnet sind, insbesondere unmittelbar aneinander grenzend. Analoges gilt für das zweite Leuchtmittel 4.

Die Leuchtvorrichtung ist nicht auf eine Gestaltung mit lediglich zwei entsprechend nebeneinander angeordneten Lichtumlenkelementen und Leuchtmitteln beschränkt. Vorzugsweise weist die Leuchtvorrichtung insgesamt - wie in Fig. 1 beispielhaft skizziert - analog gestaltete drei oder, noch bevorzugter, mehr als drei Leuchtmittel und eine entsprechende Zahl an analog gestalteten Lichtumlenkelementen auf, wobei jeweils ein Leuchtmittel und ein Lichtumlenkelement, in welches Licht des betreffenden Leuchtmittels eingekoppelt wird, ein "Segment" der Leuchtvorrichtung bilden und jeweils zwei benachbarte Segmente unter Ausbildung eines, dem zuerst genannten Spalt 10 entsprechenden weiteren Spaltes 10' aneinandergrenzend angeordnet sind, so wie mit Bezug auf das, durch das erste Leuchtmittel 2 und das erste Lichtumlenkelement 6 gebildete erste Segment und das, durch das zweite Leuchtmittel 4 und das zweite Lichtumlenkelement 8 gebildete zweite Segment beschrieben. Auf diese Weise lässt sich durch die Auskoppelflächen aller Lichtumlenkelemente bzw. aller Segmente der Leuchtvorrichtung eine Lichtabgabefläche der Leuchtvorrichtung bilden, die prinzipiell beliebig lang gestaltet sein kann.

Die Auskoppelfläche 64 des ersten Lichtumlenkelements 6 kann also beispielsweise - wie in Fig. 1a beispielhaft gezeigt - rechteckig geformt sein und dabei insbesondere eine Länge *l'* aufweisen, die gleich der Länge *l* des Spalts 10 ist und eine Breite *b,* die vorzugsweise maximal ein Drittel, besonders bevorzugt maximal ein Fünftel der Länge *l'* der Auskoppelfläche 64 des ersten Lichtumlenkelements 6 beträgt.

Durch eine entsprechende streifenförmige Ausbildung lassen sich die zur Erzielung einer bestimmten Helligkeit erforderlichen Ströme zum Betreiben der beiden Leuchtmittel 2, 4 vergleichsweise klein halten und auch die Lichtverluste innerhalb der beiden Lichtumlenkelemente 6, 8. Um eine bestimmte Oberflächenleuchtdichte $L_{Fläche}$ an der Auskoppelfläche 64 des ersten Lichtumlenkelements 6 zu erzielen, ist eine bestimmte Leuchtdichte $L_{OLED}$ des ersten Leuchtmittels 2 erforderlich, wobei sich die Beziehung zwischen diesen beiden Leuchtdichten $L_{Fläche}$, $L_{OLED}$ in Abhängigkeit der Breite *b* der Auskoppelfläche 64 und einer Erstreckung *h* des ersten Leuchtmittels 2 normal zu der Auskoppelfläche 64 wie folgt angeben lässt:

$$L_{OLED} = L_{Fläche} \cdot b / (\eta_a \cdot \eta_e \cdot h)$$

wobei $\eta_a$ die entsprechende Auskoppeleffizienz und $\eta_e$ die entsprechende Einkoppeleffizienz bedeutet. Durch eine Veränderung des Verhältnisses von *b/h* lässt sich somit eine gewünschte Leuchtdichte $L_{Fläche}$ an der Auskoppelfläche 64 erzielen und den Möglichkeiten der Elemente anpassen.

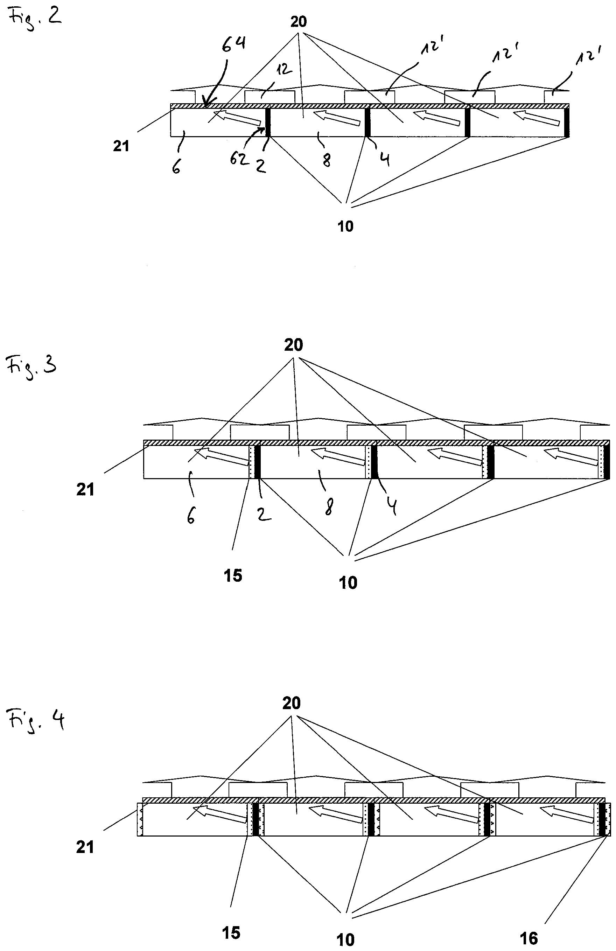

In Fig. 2 ist ein erstes konkreteres Ausführungsbeispiel einer erfindungsgemäßen Leuchtvorrichtung in einer Schnittdarstellung skizziert, wobei die Lichtumlenkelemente der Segmente pauschal mit dem Bezugszeichen 20 gekennzeichnet sind und die in entsprechender Anzahl vorhandenen Leuchtmittel mit dem Bezugszeichen 10.

Bei diesem Ausführungsbeispiel weist die Leuchtvorrichtung in Ergänzung zu den oben beschriebenen Bauelementen weiterhin ein optisches Zerstreuungselement 12 (bzw. einen Diffuser) auf, das mit Bezug auf die Auskoppelfläche 64 des ersten Lichtumlenkelements 6 den Spalt 10 zumindest teilweise, vorzugsweise vollständig abdeckend angeordnet ist. Hierdurch lässt sich erzielen, dass bei Blick auf die erste und die zweite Auskoppelfläche 64, 84 bzw. auf die Lichtabgabefläche der Leuchtvorrichtung der Spalt 10 gleichsam nicht mehr erkennbar ist und die Lichtabgabefläche mit Bezug auf deren Lichterscheinung insgesamt besonders homogen ist. Natürlich kann pro Segment für jeden weiteren Spalt 10' in analoger Weise jeweils ein weiteres optisches Zerstreuungselement 12' vorgesehen sein.

Das erste Leuchtelement 2 ist vorteilhaft mittels eines optisch transparenten Klebstoffs an die Einkoppelfläche

62 des ersten Lichtumlenkelements 6 geklebt. Analoges gilt mit Bezug auf das zweite Leuchtmittel 4 und die Einkoppelfläche 82 des zweiten Lichtumlenkelements 8.

An der Auskoppelfläche 64 des ersten Lichtumlenkelements 6 sind vorzugsweise Auskoppelemente 21 angeordnet, beispielsweise in Form von Streuzentren, Mikrolinsen, Pyramidenelementen oder Trapezelementen. Hierdurch ist eine besonders effiziente Auskopplung des ersten Lichts ermöglicht. Dabei lässt sich durch entsprechende Wahl der Dichte und Form der Auskoppelemente 21 eine besonders gute Homogenität der Lichtabgabe erreichen. Analoges gilt wiederum für die Auskoppelfläche 84 des zweiten Lichtumlenkelements 8 bzw. für die Auskoppelflächen aller Segmente.

In Fig. 3 ist ein zweites Ausführungsbeispiel skizziert. Dies unterscheidet sich vom ersten Ausführungsbeispiel darin, dass zur verbesserten Einkopplung des ersten Lichts in das erste Lichtumlenkelement 6 zwischen dem ersten Leuchtmittel 2 und der Einkoppelfläche 62 des ersten Lichtumlenkelements 6 ein Lichteinkoppelelement 15 angeordnet ist. Das Lichteinkoppelelement 15 ist vorteilhaft dazu ausgestaltet, die Lichtwinkelverteilung des ersten Lichts zu verringern. Hierdurch lässt sich eine besonders gute Einkoppeleffizienz erzielen. Analoges gilt wiederum für das zweite und jedes weitere Segment.

In Fig. 4 ist ein drittes Ausführungsbeispiel skizziert. Hierbei ist ergänzend zum ersten oder zum zweiten Ausführungsbeispiel vorgesehen, dass das erste Leuchtmittel 2 auf einer Seite, die dem zweiten Lichtumlenkelement 8 zugewandt ist, eine nach außen reflektierende Schicht 16 aufweist. Hierdurch ist eine Rückstrahlung des zweiten Lichts ermöglicht, und somit eine weitergehende Effizienzsteigerung. Die reflektierende Schicht 16 kann dabei insbesondere unmittelbar an eine weitere Fläche des zweiten Lichtumlenkelements 8 angrenzen, die der Einkoppelfläche 82 des zweiten Lichtumlenkelements 8 gegenüberliegt. Analoges gilt wiederum für das zweite und jedes weitere Segment.

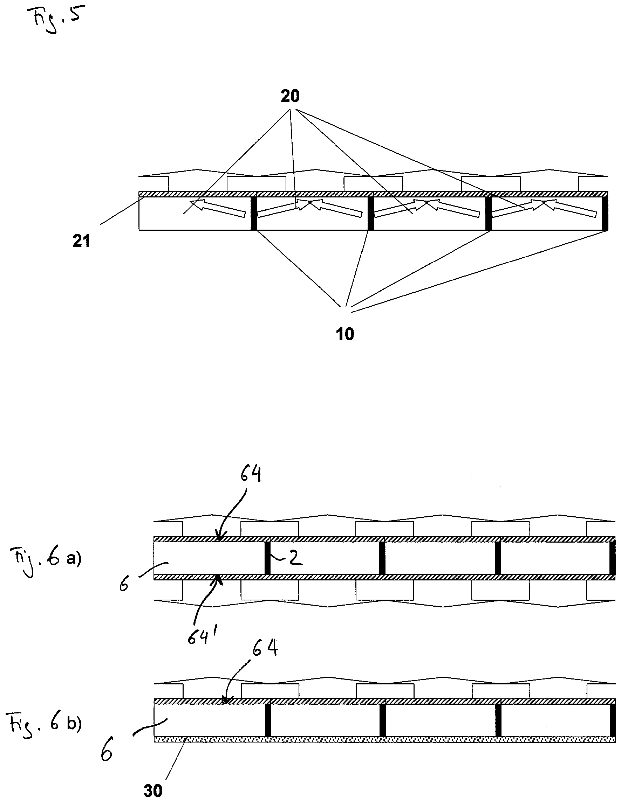

In Fig. 5 ist ein viertes Ausführungsbeispiel skizziert. Hierbei ist das erste Leuchtmittel 2 derart gestaltet, dass es ein weiteres Licht in Richtung auf das zweite Lichtumlenkelement 8 abgibt und das weitere Licht in das zweite Lichtumlenkelement 8 eingekoppelt wird. Die wenigstens eine OLED bzw. QLED des ersten Leuchtmittels 2 kann dementsprechend zwei lichtdurchlässige Elektroden aufweisen. Durch diese Ausgestaltung lässt sich die Homogenität und Effizienz der Lichtauskopplung weitergehend verbessern. Außerdem lässt sich erzielen, dass die Lichtumlenkelemente 6, 8 - zur Erzielung einer bestimmten Helligkeit bzw. Homogenität - breiter gestaltet werden können. Hierdurch ist weiterhin erzielbar, dass die Leuchtvorrichtung mit reduziertem Aufwand aufgebaut bzw. zusammengebaut werden kann. Analoges gilt wiederum für das zweite bzw. jedes weitere Segment.

Gemäß einem fünften Ausführungsbeispiel ist vorgesehen, dass die Einkoppelfläche 62 des ersten Lichtumlenkelements 6 und die Einkoppelfläche 82 des zweiten Lichtumlenkelements 8 zueinander weisen. Das erste Leuchtmittel 2 und das zweite Leuchtmittel 4 sind in diesem Fall "Rücken an Rücken" zwischen dem ersten Lichtumlenkelement 6 und dem zweiten Lichtumlenkelement 8 angeordnet. Hier ergeben sich - wie beim vierten Ausführungsbeispiel - Vorteile mit Bezug auf die Mindestbreite der Auskoppelflächen 64, 84 bzw. Lichtumlenkelemente 6, 8. Insbesondere wird hierdurch die notwendige Breite der Lichtumlenkelemente 6, 8 bei gegebener Lichtstromanforderung erhöht. Ein "Segment" der Leuchtvorrichtung ist in diesem Fall durch ein Lichtumlenkelement und zwei Leuchtmittel gebildet, wobei das Lichtumlenkelement analog zu dem ersten Lichtumlenkelement 6 gestaltet ist und die zwei Leuchtmittel analog zu dem ersten und dem zweiten Leuchtmittel 2, 4. In diesem Sinn kann die Leuchtvorrichtung auch bei dieser Ausgestaltung wiederum entsprechend mehrere Segmente aufweisen.

In Fig. 6a ist eine Variante skizziert, bei der eine Abgabe eines von dem ersten Leuchtmittel 2 stammenden Lichts nicht nur über Auskoppelfläche 64 vorgesehen ist, sondern auch über eine weitere Auskoppelfläche 64' des ersten Lichtumlenkelements 6, die vorzugsweise der zuerst genannten Auskoppelfläche 64 gegenüberliegend angeordnet ist. Analoges gilt wiederum für das zweite bzw. jedes weitere Segment. Mit der Leuchtvorrichtung kann auf diese Weise eine Lichtabgabe in zwei entgegengesetzte Raumwinkelbereiche bzw. Richtungen erzeugt werden.

In Fig. 6b ist eine weitere Variante skizziert, bei der das erste Lichtumlenkelement 6 auf einer der Auskoppelfläche 64 gegenüberliegenden Seite eine reflektierende Schicht 30 aufweist; hierdurch lässt sich die Effizienz weitergehend erhöhen. Auf der Auskoppelfläche 64 ist vorteilhaft eine diffuse transparente Schicht aufgebracht. Analoges gilt wiederum für das zweite bzw. jedes weitere Segment.

Insbesondere die in den Figuren 6a und 6b gezeigten Varianten können dazu dienen, die Leuchtvorrichtung als Gesamtleuchtenausführungsform zu verwenden.

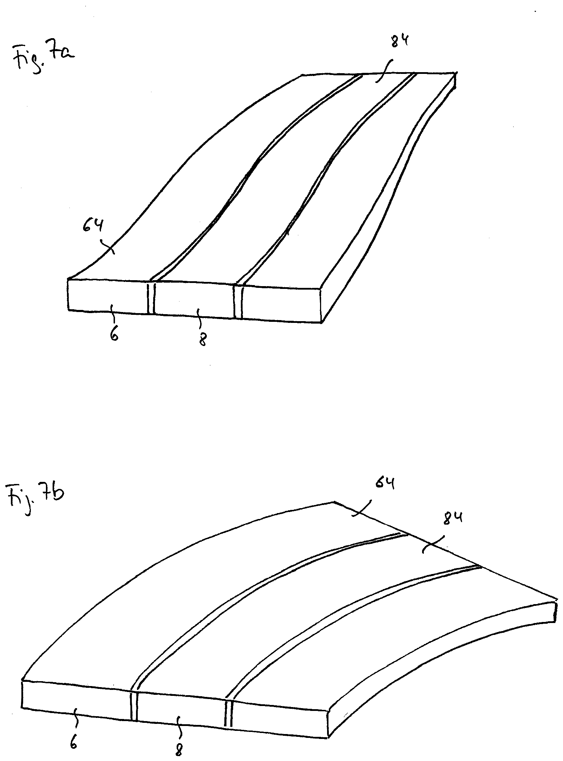

Die Lichtauskoppelflächen 64, 84 müssen nicht plan gestaltet sein; sie können alternativ gewölbt bzw. geschwungen geformt sein, wie exemplarisch in Fig. 7a angedeutet. Aufgrund der Dünnheit von OLEDs bzw. QLEDs lässt sich hierbei eine homogene Wölbung der Lichtabgabefläche erzielen. Die Lichtauskoppelflächen 64, 84 müssen auch nicht rechteckförmig gestaltet sein; sie können auch beispielsweise Bogenform aufweisen, wie exemplarisch in Fig. 7b angedeutet.

Die dargestellten Merkmale der einzelnen Ausführungsformen und Varianten lassen sich natürlich auch in nicht ausdrücklich beschriebenen Verbindungen kombinieren. Beispielsweise lassen sich sowohl die beschriebenen Auskoppelelemente 21 und außerdem die Zerstreuungselemente 12 in einer Ausführung verbinden, wobei dann - wie in Fig. 5 angedeutet - die Zerstreuungselemente 12 nicht unmittelbar auf den Auskoppelflächen angeordnet sein müssen, sondern beispielsweise auf den Auskoppelelementen 21 angeordnet sein können. Die in Fig. 7a exemplarisch skizzierten, gewölbten Auskoppelflächen lassen sich bei jedem Ausführungsbeispiel bzw. bei jeder Variante realisieren u.s.w.

**Patentansprüche**

1. Leuchtvorrichtung, aufweisend

   - ein erstes Leuchtmittel (2) in Form wenigstens einer OLED oder wenigstens einer QLED zur Erzeugung eines ersten Lichts,
   - ein zweites Leuchtmittel (4) in Form wenigstens einer OLED oder wenigstens einer QLED zur Erzeugung eines zweiten Lichts,
   - ein erstes Lichtumlenkelement (6) mit einer Einkoppelfläche (62) zur Einkopplung des ersten Lichts und einer Auskoppelfläche (64) zur Auskopplung des ersten Lichts,
   - ein zweites Lichtumlenkelement (8) mit einer Einkoppelfläche (82) zur Einkopplung des zweiten Lichts und einer Auskoppelfläche (84) zur Auskopplung des zweiten Lichts,

   wobei die Auskoppelfläche (64) des ersten Lichtumlenkelements (6) und die Auskoppelfläche (84) des zweiten Lichtumlenkelements (8) lediglich durch einen Spalt (10) getrennt sind, der maximal so breit ist wie ein Zehntel, vorzugsweise ein Hundertstel, insbesondere ein Fünfhundertstel seiner Länge ($l$), wobei das erste Lichtumlenkelement (6) quaderförmig ist,
   **dadurch gekennzeichnet,**
   **dass** das erste Leuchtmittel (2) auf einer Seite, die dem zweiten Lichtumlenkelement (8) zugewandt ist, eine nach außen reflektierende Schicht (16) aufweist.

2. Leuchtvorrichtung nach Anspruch 1,
   bei der die Auskoppelfläche (64) des ersten Lichtumlenkelements (6) streifenförmig ist und die Auskoppelfläche (84) des zweiten Lichtumlenkelements (8) ebenfalls streifenförmig ist, wobei vorzugsweise die beiden genannten Auskoppelflächen (64, 84) parallel zueinander angeordnet sind.

3. Leuchtvorrichtung nach Anspruch 2,
   bei der die Auskoppelfläche (64) des ersten Lichtumlenkelements (6) eine Länge ($l'$) aufweist, die gleich der Länge ($l$) des Spalts (10) ist und eine Breite (b), die maximal ein Drittel, vorzugsweise maximal ein Fünftel der Länge ($l'$) der Auskoppelfläche (64) des ersten Lichtumlenkelements (6) beträgt.

4. Leuchtvorrichtung nach einem der vorhergehenden Ansprüche,
   weiterhin aufweisend

   - ein optisches Zerstreuungselement (12), das mit Bezug auf die Auskoppelfläche (64) des ersten Lichtumlenkelements (6) den Spalt (10) zumindest teilweise, vorzugsweise gänzlich abdeckend angeordnet ist.

5. Leuchtvorrichtung nach einem der vorhergehenden Ansprüche,
   bei der das erste Leuchtmittel (2) mittels eines optisch transparenten Klebstoffs an die Einkoppelfläche (62) des ersten Lichtumlenkelements (6) geklebt ist.

6. Leuchtvorrichtung nach einem der vorhergehenden Ansprüche,
   bei der an der Auskoppelfläche (64) des ersten Lichtumlenkelements (6) Auskoppelelemente (21) angeordnet sind, beispielsweise in Form von Streuzentren, Mikrolinsen, Pyramidenelementen oder Trapezelementen.

7. Leuchtvorrichtung nach einem der vorhergehenden Ansprüche,
   bei der zwischen dem ersten Leuchtmittel (2) und der Einkoppelfläche (62) des ersten Lichtumlenkelements (6) ein Lichteinkoppelelement (15) angeordnet ist, das vorzugsweise dazu ausgelegt ist, die Richtungsverteilung des ersten Lichts vor dessen Einkopplung in das erste Lichtumlenkelement (6) zu verringern.

8. Leuchtvorrichtung nach einem der vorhergehenden Ansprüche,
   bei der das erste Leuchtmittel (2) ein weiteres Licht in Richtung auf das zweite Lichtumlenkelement (8) abgibt und das weitere Licht in das zweite Lichtumlenkelement (8) eingekoppelt wird.

**9.** Leuchtvorrichtung nach einem der vorhergehenden Ansprüche,
bei der die Einkoppelfläche (62) des ersten Lichtumlenkelements (6) und die Einkoppelfläche (82) des zweiten Lichtumlenkelements (8) zueinander weisen.

**10.** Leuchtvorrichtung nach einem der Ansprüche 1 bis 8,
bei der die Einkoppelfläche (62) des ersten Lichtumlenkelements (6) und die Einkoppelfläche (82) des zweiten Lichtumlenkelements (8) mit Bezug auf das zweite Lichtumlenkelement (8) an gegenüberliegenden Seiten angeordnet sind.

**11.** Leuchtvorrichtung nach einem der vorhergehenden Ansprüche,
weiterhin aufweisend

- ein drittes Leuchtmittel zur Erzeugung eines dritten Lichts, wobei das dritte Leuchtmittel analog zu dem ersten Leuchtmittel (2) ausgestaltet ist und
- ein drittes Lichtumlenkelement mit einer Einkoppelfläche zur Einkopplung des dritten Lichts und einer Auskoppelfläche zur Auskopplung des dritten Lichts, wobei das dritte Lichtumlenkelement analog zum ersten Lichtumlenkelement ausgestaltet ist und wobei die Auskoppelfläche (84) des zweiten Lichtumlenkelements (8) und die Auskoppelfläche des dritten Lichtumlenkelements lediglich durch einen weiteren Spalt (10') getrennt sind, der analog zu dem zuerst genannten Spalt (10) ausgebildet ist.

**12.** Leuchtvorrichtung nach einem der vorhergehenden Ansprüche,
bei der das erste Lichtumlenkelement (6) auf einer der Auskoppelfläche (64) des ersten Lichtumlenkelements (6) gegenüberliegenden Seite eine nach innen reflektierende Schicht (30) aufweist.

**13.** Leuchtvorrichtung nach einem der vorhergehenden Ansprüche,
bei der die Auskoppelfläche (64) des ersten Lichtumlenkelements (6) nicht plan ist, sondern eine Wölbung aufweist.

**14.** Leuchtvorrichtung nach einem der vorhergehenden Ansprüche,
bei der das erste Lichtumlenkelement (6) eine weitere Auskoppelfläche (64') aufweist, die der zuerst genannten Auskoppelfläche (64) des ersten Lichtumlenkelements (6) gegenüberliegt, wobei die Leuchtvorrichtung derart gestaltet ist, dass ein von dem ersten Leuchtmittel (2) abgegebenes Licht über die Einkoppelfläche (62) des ersten Lichtumlenkelements (6) in das erste Lichtumlenkelement (6) eingekoppelt wird und über die weitere Auskoppelfläche (64') ausgekoppelt wird.

**Claims**

**1.** Lighting device comprising:

- a first light source (2) in the form of at least one OLED or at least one QLED for generating a first light,
- a second light source (4) in the form of at least one OLED or at least one QLED for generating a second light,
- a first light deflection element (6) with an entry surface (62) for inputting the first light and an exit surface (64) for outputting the first light,
- a second light deflection element (8) with an entry surface (82) for inputting the second light and an exit surface (84) for outputting the second light,

wherein the exit surface (64) of the first light-deflection element (6) and the exit surface (84) of the second light-deflection element (8) are separated only by a gap (10) which is at most as wide as one-tenth, preferably one-hundredth, in particular one five-hundredth of its length ($l$), wherein the first light deflection element (6) is rectangular,
**characterized in that**
the first light source (2) has an outwardly-reflecting layer (16) on a side facing the second light deflection element (8).

**2.** Lighting device according to claim 1, wherein the exit surface (64) of the first light deflection element (8) is strip-shaped, and wherein the exit surface (84) of the second light deflection element (8) is also strip-shaped, wherein the two exit surfaces (64, 84) are preferably arranged parallel to one another.

**3.** Lighting device according to claim 2, wherein the exit surface (64) of the first light deflection element (6) has a length ($l'$), which is equal to the length ($l$), of the gap (10), and a width ($b$), which is at most one third, preferably at most one fifth, of the length (*l'*) of the exit surface (64) of the first light deflection element (6).

4.  Lighting device according to one of the preceding claims, further comprising:

    - an optical diffusion element (12) arranged to at least partly, preferably completely, cover the gap (10) with respect to the exit surface (64) of the first light deflection element (6).

5.  Lighting device according to one of the preceding claims, wherein the first light source (2) is adhered to the entry surface (62) of the first light deflection element (6) by means of an optically-transparent adhesive.

6.  Lighting device according to one of the preceding claims, wherein the exit elements (21) are arranged on the exit surface (64) of the first light deflection element (6), for example in the form of scattering centers, microlenses, pyramidal elements or trapezoidal elements.

7.  Lighting device according to one of the preceding claims, wherein a light entry element (15) is arranged between the first light source (2) and the entry surface (62) of the first light deflection element (6), and is preferably designed to reduce the directional distribution of the first light before it is input into the first light deflection element (6).

8.  Lighting device according to one of the preceding claims, wherein the first light source (2) emits a further light in the direction of the second light deflection element (8), and the further light is input into the second light deflection element (8).

9.  Lighting device according to one of the preceding claims, wherein the entry surface (62) of the first light deflection element (6) and the entry surface (82) of the second light deflection element (8) point towards one another.

10. Lighting device according to one of claims 1 to 8, wherein the entry surface (62) of the first light deflection element (6) and the entry surface (82) of the second light deflection element (8) are arranged on opposite sides with respect to the second light deflection element (8).

11. Lighting device according to one of the preceding claims, further comprising:

    - a third light source for generating a third light, wherein the third light source is designed analogously to the first light source (2);
    - a third light deflection element with an entry surface for inputting the third light and an exit surface for outputting the third light, wherein the third light deflection element is designed analogously to the first light deflection element, and wherein the exit surface (84) of the second light deflection element (8) and the exit surface of the third light deflection element are separated only by a further gap (10'), which is formed analogously to the first mentioned gap (10).

12. Lighting device according to one of the preceding claims, wherein the first light deflection element (6) comprises an inwardly-reflecting layer (30) on a side lying opposite the exit surface (64) of the first light deflection element (6).

13. Lighting device according to one of the preceding claims, wherein the exit surface (64) of the first light deflection element (6) is not planar but comprises a curvature.

14. Lighting device according to one of the preceding claims, wherein the first light deflection element (6) comprises a further exit surface (64') facing the first mentioned exit surface (64) of the first light deflection element (6), wherein the lighting device is so configured that a light emitted from the first light source (2) is input into the first light deflection element (6) via the entry surface (62) of the first light deflection element (6), and output via the further exit surface (64').

**Revendications**

1.  Dispositif d'éclairage comprenant :

    - un premier moyen d'éclairage (2) sous la forme d'au moins une OLED ou d'au moins une QLED pour la production d'une première lumière,
    - un deuxième moyen d'éclairage (4) sous la forme d'au moins une OLED ou d'au moins une QLED pour la production d'une deuxième lumière,
- un premier élément de déviation de lumière (6) avec une face d'entrée (62) pour l'entrée de la première lumière et une face de sortie (64) pour la sortie de la première lumière,
- un deuxième élément de déviation de lumière (8) avec une face d'entrée (82) pour l'entrée de la deuxième lumière et une face de sortie (84) pour la sortie de la deuxième lumière,

la face de sortie (64) du premier élément de déviation de lumière (6) et la face de sortie (84) du deuxième élément de déviation de lumière (8) étant séparées uniquement par un interstice (10) qui est au maximum aussi large qu'un dixième, de préférence un centième, plus particulièrement un cinq centième de sa longueur (l), le premier élément de déviation de lumière (6) présentant une forme parallélépipédique,
**caractérisé en ce que**
le premier moyen d'éclairage (2) comprenant, sur un côté qui est orienté vers le deuxième élément de déviation de lumière (8), une couche réfléchissante vers l'extérieur (16).

2. Dispositif d'éclairage selon la revendication 1,
dans lequel la face de sortie (64) du premier élément de déviation de lumière (6) présente la forme d'une bande et la face de sortie (84) du deuxième élément de déviation de lumière (8) présente également la forme d'une bande, de préférence les deux faces de sortie (64, 84) étant disposées parallèlement entre elles.

3. Dispositif d'éclairage selon la revendication 2,
dans lequel la face de sortie (64) du premier élément de déviation de lumière (6) présente une longueur (l') qui est égale à la longueur (l) de l'interstice (10) et une largeur (b) qui représente au maximum un tiers, de préférence au maximum un cinquième de la longueur (l') de la face de sortie (64) du premier élément de déviation de lumière (6).

4. Dispositif d'éclairage selon l'une des revendications précédentes, comprenant en outre :

- un élément de dispersion optique (12) qui est disposé de façon à recouvrir au moins partiellement, de préférence entièrement, l'interstice (10) par rapport à la face de sortie (64) du premier élément de déviation de lumière (6).

5. Dispositif d'éclairage selon l'une des revendications précédentes,
dans lequel le premier moyen d'éclairage (2) est collé au moyen d'une colle optiquement transparente à la face d'entrée (62) du premier élément de déviation de lumière (6).

6. Dispositif d'éclairage selon l'une des revendications précédentes,
dans lequel, sur la face de sortie (64) du premier élément de déviation de lumière (6), sont disposés des éléments de sortie (21), par exemple sous la forme de centres de diffusion, des micro-lentilles, des éléments pyramidaux ou des éléments trapézoïdaux.

7. Dispositif d'éclairage selon l'une des revendications précédentes,
dans lequel, entre le premier moyen d'éclairage (2) et la face d'entrée (62) du premier élément de déviation de lumière (6), est disposé un élément d'entrée de lumière (15) qui est de préférence conçu pour réduire la répartition d'orientation de la première lumière avant son entrée dans le premier élément de déviation de lumière (6).

8. Dispositif d'éclairage selon l'une des revendications précédentes,
dans lequel le premier moyen d'éclairage (2) émet une lumière supplémentaire en direction du deuxième élément de déviation de lumière (8) et la deuxième lumière est introduite dans le deuxième élément de déviation de lumière (8).

9. Dispositif d'éclairage selon l'une des revendications précédentes,
dans lequel la face d'entrée (62) du premier élément de déviation de lumière (6) et la face d'entrée (82) du deuxième élément de déviation de lumière (8) sont orientées l'une vers l'autre.

10. Dispositif d'éclairage selon l'une des revendications 1 à 8,
dans lequel la face d'entrée (62) du premier élément de déviation de lumière (6) et la face d'entrée (82) du deuxième élément de déviation de lumière (8) sont disposées sur des côtés opposés par rapport au deuxième élément de déviation de lumière (8).

11. Dispositif d'éclairage selon l'une des revendications précédentes, comprenant en outre :

- un troisième moyen d'éclairage pour la production d'une troisième lumière, le troisième moyen d'éclairage étant conçu de manière analogue au premier moyen d'éclairage (2) et
- un troisième élément de déviation de lumière avec une face d'entrée pour l'entrée de la troisième lumière et une face de sortie pour la sortie de la troisième lumière,

le troisième élément de déviation de lumière étant conçu de manière analogue au premier élément de déviation de lumière et la face de sortie (84) du deuxième élément de déviation de lumière (8) et la face de sortie du troisième élément de déviation de lumière étant séparés uniquement par un interstice supplémentaire (10'), qui est conçu de manière analogue à l'interstice (10) mentionné précédemment.

12. Dispositif d'éclairage selon l'une des revendications précédentes,
dans lequel le premier élément de déviation de lumière (6) comprend, sur un côté opposé à la face de sortie (64) du premier élément de déviation de lumière (6), une couche réfléchissante vers l'intérieur (30).

13. Dispositif d'éclairage selon l'une des revendications précédentes,
dans lequel la face de sortie (64) du premier élément de déviation de lumière (6) n'est pas plane mais présente un bombement.

14. Dispositif d'éclairage selon l'une des revendications précédentes,
dans lequel le premier élément de déviation de lumière (6) comprend une face de sortie supplémentaire (64') qui est opposée à la face de sortie (64), déjà mentionnée, du premier élément de déviation de lumière (6), le dispositif d'éclairage étant conçu de façon à ce qu'une lumière émise par le premier moyen d'éclairage (2) soit introduite par l'intermédiaire de la face d'entrée (62) du premier élément de déviation de lumière (6) dans le premier élément de déviation de lumière (6) et sortie par la face de sortie supplémentaire (64').

Fig. 1a

Fig. 1b

Fig. 2

Fig. 3

Fig. 4

13

Fig. 5

**20**

**21**

**10**

Fig. 6 a)

64

2

6

64'

Fig. 6 b)

64

6

**30**

Fig. 7a

Fig. 7b

**IN DER BESCHREIBUNG AUFGEFÜHRTE DOKUMENTE**

**In der Beschreibung aufgeführte Patentdokumente**

- US 20100026931 A1
- US 20110026273 A1